# EUROPÄISCHE PATENTSCHRIFT

(11) **EP 2 949 622 B1**
(45) Veröffentlichungstag und Bekanntmachung des Hinweises auf die Patenterteilung: **09.03.2022**
(21) Anmeldenummer: 15169100.3
(22) Anmeldetag: 26.05.2015
(51) Int. Cl.: C01B 7/04, C01B 7/07

(54) **VERFAHREN ZUR VERARBEITUNG VON CHLORWASSERSTOFF AUS DER ISOCYANATHERSTELLUNG**
METHOD FOR PROCESSING HYDROGEN CHLORIDE FROM ISOCYANATE PRODUCTION
PROCÉDÉ DE TRAITEMENT DU CHLORURE D'HYDROGÈNE À PARTIR DE LA PRODUCTION D'ISOCYANATES

(30) Priorität: 27.05.2014 EP 14170116
(43) Veröffentlichungstag der Anmeldung: 02.12.2015
(73) Patentinhaber: Covestro Intellectual Property GmbH & Co. KG, 51373 Leverkusen (DE)
(72) Erfinder: Weber, Ralph, 42799 Leichlingen (DE); Ehrig, Martin, 51373 Leverkusen (DE); Leonhäuser, Johannes, 51467 Bergisch Gladbach (DE); Weißenberg, Dirk, 51377 Leverkusen (DE)
(74) Vertreter: Levpat

(56) Entgegenhaltungen:
- EP-A1- 0 595 492
- EP-A1- 1 099 666
- GB-A- 1 004 679
- US-A1- 2004 024 244
- US-B1- 6 387 345
- Severin Austin ET AL: "Hydrochloric Acid" In: "Ullmann's Encyclopedia of Industrial Chemistry", 15. Juni 2000 (2000-06-15), Wiley-VCH Verlag GmbH & Co. KGaA, Weinheim, Germany, XP055139157, ISBN: 978-3-52-730673-2 DOI: 10.1002/14356007.a13_283, * Absatz [02.3]; Abbildung 10 *

## Beschreibung

Die vorliegende Erfindung betrifft ein Verfahren zur Verarbeitung von Chlorwasserstoff aus der Isocyanatherstellung, umfassend die Schritte: a) Bereitstellen von Chlorwasserstoff; b) Reinigen des bereitgestellten Chlorwasserstoffs; sowie weiterhin umfassend Schritt c) oder Schritt d):
c) Kontaktieren des gereinigten Chlorwasserstoffs mit Wasser und/oder mit hinsichtlich der Aufnahme von Chlorwasserstoff nicht gesättigter Salzsäure
d) Weiterverarbeitung des gereinigten Chlorwasserstoffs zu Chlor durch partielle Oxidation. Salzsäure wird beispielsweise in der Halbleiterindustrie als Prozesschemikalie benötigt. Aufgrund
des störenden Einflusses von als Dotierungsmitteln wirksamen Verunreinigungen muss ein besonderes Augenmerk auf die Reinheit der Salzsäure gelegt werden. Dieses trifft bereits für den zur Herstellung der Salzsäure eingesetzten Chlorwasserstoff zu, welcher in großen Mengen aus der Herstellung von Isocyanaten erhalten werden kann.

Im Stand der Technik sind verschiedene Verfahren zur Behandlung der Reaktionsmischung beschrieben, die bei der Herstellung von Isocyanaten durch Phosgenierung von Aminen erhalten wird.

WO 2009/037179 A1 beschreibt ein Verfahren zur Herstellung von Diisocyanaten durch Umsetzung der korrespondierenden Diamine mit Phosgen im stöchiometrischen Überschuss von Phosgen in mindestens einer Reaktionszone.

EP 1 935 875 A1 offenbart ein Verfahren zur Herstellung von Isocyanaten durch Umsetzung entsprechender primärer Amine mit Phosgen.

WO 2007/131700 A1 betrifft ein Verfahren zur Herstellung von Isocyanaten, wenigstens umfassend die folgenden Schritte: a) Herstellung von Phosgen durch Umsetzung von Chlor mit Kohlenmonoxid; b) Umsetzung des gemäß Schritt a) gebildeten Phosgens mit wenigstens einem organischen Amin unter Bildung wenigstens eines Isocyanats und von Chlorwasserstoff; c) Abtrennung und Aufarbeitung der in Schritt b) gebildeten Isocyanate; d) Abtrennung des gemäß Schritt b) gebildeten Chlorwasserstoffs; e) Oxidation des Chlorwasserstoffs mit Sauerstoff in der Gasphase zu Chlor; f) Rückführung wenigstens eines Teils des gemäß Schritt e) hergestellten Chlors in die Herstellung von Phosgen gemäß Schritt a), wobei die Oxidation e) mittels energiereicher, insbesondere elektronenanregender und/oder ionisierender Strahlung und/oder einer plasmabildenden Gasentladung und/oder eines Plasmas initiiert wird.

WO 2007/134774 A1 offenbart ein Verfahren zur Herstellung von organischen Isocyanaten, das die Schritte umfasst: a) Herstellung von Phosgen durch Umsetzung von CO mit Cl₂; b) Umsetzung des Phosgens mit organischen Aminen unter Bildung der organischen Isocyanate; c) Abtrennung der organischen Isocyanate, d) Abtrennung des Kohlenmonoxids aus dem HCl-haltigen Abgas der Isocyanatsynthese durch Umsetzung mit Chlor unter Bildung von Phosgen, e) Abtrennung des gebildeten Phosgens; f) gegebenenfalls Rückführung des gebildeten Phosgens in eine Isocyanatsynthese, und g) gegebenenfalls Unterwerfen des HCl-haltigen, CO-verarmten Gases der HCl-Oxidation vor oder nach der Abtrennung e) des Phosgens.

WO 2007/131638 beschreibt ebenfalls ein Verfahren zur gekoppelten Herstellung von Isocyanaten und Chlor.

EP 1 849 767 A1 offenbart ein Verfahren zur Herstellung eines Isocyanats, wobei das Verfahren umfasst, dass man: a) mindestens 1 Amin mit Phosgen, ggf. in der Gegenwart eines Lösungsmittels, zur Reaktion bringt, um ein entsprechendes Isocyanat und einen Strom, enthaltend Chlorwasserstoff, Phosgen und ggf. Lösungsmittel, niedrig-siedende Verbindungen und inerte Substanzen, zu erzeugen, b) den Strom, enthaltend Chlorwasserstoff, Phosgen und ggf. Lösungsmittel, niedrig-siedende Verbindungen und inerte Substanzen, in einer mindestens zweistufigen Abfolge von Absorptionsstufen, umfassend (1) mindestens 1 isotherme Absorptionsstufe und (2) mindestens 50 1 adiabatische Absorptionsstufe, trennt, um (i) einen Chlorwasserstoff-Strom, der nicht mehr als 0,5 Gew.%, bezogen auf das Gesamtgewicht des Chlorwasserstoff-Stroms, Phosgen enthält, und (ii) einen flüssigen Phosgen-Strom zu erhalten, und man c) den flüssigen Phosgen-Strom (ii) zu Stufe a) rückführt.

EP 1 743 882 A1 betrifft ein Verfahren zur Herstellung von Isocyanaten, umfassend die folgenden Schritte: (a) Herstellung von Phosgen durch Umsetzung von Chlor mit Kohlenmonoxid; (b) Umsetzung des gemäß Schritt (a) gebildeten Phosgens mit wenigstens einem organischen Amin unter Bildung wenigstens eines Isocyanats und von Chlorwasserstoff; (c) Abtrennung und Aufarbeitung der in Schritt (b) gebildeten Isocyanate; (d) Abtrennung und ggf. Reinigung des gemäß Schritt (b) gebildeten Chlorwasserstoffs; (e) Herstellung einer wässrigen Lösung des Chlorwasserstoffs; (f) ggf. Reinigung der wässrigen Lösung von Chlorwasserstoff; (g) Elektrochemische Oxidation wenigstens eines Teils der wässrigen Chlorwasserstofflösung zu Chlor; (h) Rückführung wenigstens eines Teils des gemäß Schritt (g) hergestellten Chlors in die Herstellung von Phosgen gemäß Schritt (a).

Gegebenenfalls erfolgt gemäß Schritt (d) eine Reinigung des Chlorwasserstoffs, um den Anteil an Lösungsmittel zu verringern. Dies kann gemäß dieser Patentanmeldung mittels Ausfrieren erfolgen, indem in Abhängigkeit von den physikalischen Eigenschaften des Lösemittels der Chlorwasserstoff zum Beispiel durch eine oder mehrere Kühlfallen geleitet wird. Alternativ erfolgt die gemäß Schritt (d) gegebenenfalls vorgesehene Reinigung des Chlorwasserstoffs mittels Adsorption von organischen Verunreinigungen, wie Lösemittelreste, an Aktivkohle. In einer weiteren Alternative kann für die gemäß Schritt (d) gegebenenfalls vorgesehene Reinigung des Chlorwasserstoffs eine Destillation des Chlorwasserstoffes vorgesehen sein. Diese erfolgt nach Kondensation des gasförmigen Chlorwasserstoffes. Bei der Destillation des kondensierten Chlorwasserstoffes wird der gereinigte Chlorwasserstoff als Kopfprodukt der Destillation entnommen, wobei die Destillation unter dem Fachmann bekannte, für eine solche Destillation übliche Bedingungen von Druck, Temperatur u.ä. erfolgt.

Die wässrige Chlorwasserstofflösung wird ggf. in einem Schritt (f) dieser Veröffentlichung einer Reinigung, insbesondere zur weiteren Verringerung des Lösungsmittelanteils und des Phosgengehalts, unterworfen. Dies kann mittels Strippung in einer Kolonne in einer dem Fachmann bekannten Weise geschehen, z.B. durch Einleiten der aufkonzentrierten Salzsäure in eine Packungskolonne, die entweder mit einem Umlaufverdampfer oder mit einer Dampfeinspeisung versehen ist. Anstatt die Strippung in einer separaten Stripperkolonne durchzuführen, kann sie auch in der Absorptionskolonne selbst durch Direkteinspeisung von Dampf, bevorzugt in den unter der Absorptionskolonne angeordneten Abtriebsteil, erfolgen. Anstelle der Strippung in der Absorptionskolonne kann auch durch partielles Destillieren mit Hilfe eines der Absorptionskolonne nachgeschalteten Wärmetauschers der Lösemittelanteil im Chlorwasserstoff reduziert werden.

Darüber hinaus wird die wässrige Chlorwasserstofflösung in dem ggf. vorgesehenen Schritt (f) einer Reinigung zur Entfernung von Eisen-, Aluminium- und/oder Siliziumverbindungen unterworfen. Bevorzugt erfolgt die Entfernung von Eisen-, Aluminium- und/oder Siliziumverbindungen mittels chelatbildender Ionenaustauscher. Derartige Ionenaustauscher sind kommerziell erhältlich.

EP 1 867 631 betrifft ein System zur Herstellung von Polyisocyanaten, bei dem ebenfalls die Reinigung von HCl beschrieben wird.

EP 2 468 387 A1 beschreibt eine Gasreinigung von Phosgen durch Kontakt mit einer Flüssigkeit. Ebenfalls erwähnt wird die Reinigung von Chlorwasserstoff als Nebenprodukt.

WO 2005/123665 A1 betrifft ein Verfahren zur Herstellung von Isocyanaten durch Umsetzung von Aminen mit Phosgen in der Gasphase in einer Reaktionszone, wobei das Reaktionsgemisch zum Abbruch der Reaktion durch eine Zone geführt wird, in der eine Flüssigkeit eingedüst wird, dadurch gekennzeichnet, dass das Reaktionsgemisch zwischen der Reaktionszone und der Zone, in der die Flüssigkeit eingedüst wird, durch eine Zone geführt wird, die einen reduzierten Strömungsquerschnitt aufweist.

EP 0 618 170 A1 offenbart ein Verfahren zur Herstellung von wässriger Salzsäure mit einem Eisengehalt von weniger als 20 ppb, wobei die Salzsäure mit einem stark basischem Anionenaustauscherharz kontaktiert wird.

EP 1 529 033 A1 beschreibt ebenfalls ein Verfahren zur Herstellung von organischen Isocyanaten, bei dem erhaltener Chlorwasserstoff mittels Absorption, Adsorption, Destillation oder Extraktion gereinigt werden kann. Es wird auch die Möglichkeit erwähnt, dass zur Reinigung Chlorwasserstoff in Wasser oder verdünnter Salzsäure absorbiert und später desorbiert werden kann.

EP 1 318 101 A1 offenbart ein Verfahren zur Herstellung von weitgehend HBr-freiem HCl-Gas oder weitgehend HBr-freier wässriger HCl-Lösung, das folgende Schritte aufweist: a) Bereitstellen von HBr-haltigem HCl-Gas; b) Leiten des HBr-haltigen HCl-Gases durch an HCl gesättigte wässrige HCl-Lösung; c) Abtrennen von HBr-haltiger an HCl gesättigter wässriger HCl-Lösung; d) gegebenenfalls Leiten des in Schritt b) erhaltenen weitgehend HBr-freien HCl-Gases in Wasser zur Gewinnung von weitgehend HBr-freier wässriger HCl-Lösung; wobei gegebenenfalls in Schritt d) erzeugte weitgehend HBr-freie wässrige HCl-Lösung in Schritt b) des Verfahrens geführt wird.

US2004/024244 offenbart ein Verfahren zur Herstellung von Isocyanaten.

EP 0595 492 offenbart offenbart ein Verfahren wobei ein HCl und N2 enthaltender Strom mit Salzsäure gereinigt wird.

Neben den im Stand der Technik erwähnten anorganischen Verunreinigungen wie HBr oder Eisen können im HCl-Gas, welches aus der Isocyanatherstellung stammt, auch organische Verunreinigungen enthalten sein. Wie die Erfinder durch eigene Vorversuche festgestellt haben, ist deren Entfernung adsorbtiv, beispielsweise an Aktivkohle, nicht zufriedenstellend möglich. Ebenfalls nicht zufriedenstellend waren destillative und extraktive Reinigungsverfahren.

Die vorliegende Erfindung hat sich daher die Aufgabe gestellt, die Nachteile im Stand der Technik zumindest teilweise zu beheben. Insbesondere hat sie sich die Aufgabe gestellt, ein Verfahren zur Reinigung von HCl-Gas bereitzustellen, mit dem organische und/oder stickstoffhaltige Verunreinigungen abgetrennt werden können.

Erfindungsgemäß gelöst wird diese Aufgabe durch ein Verfahren zur Verarbeitung von Chlorwasserstoff aus der Isocyanatherstellung, umfassend die Schritte:
a) Bereitstellen von Chlorwasserstoff
b) Reinigen des bereitgestellten Chlorwasserstoffs
sowie weiterhin umfassend Schritt c) oder Schritt d):
c) Kontaktieren des gereinigten Chlorwasserstoffs mit Wasser und/oder mit hinsichtlich der Aufnahme von Chlorwasserstoff nicht gesättigter Salzsäure, wobei ergänzend zuvor auch ein Strippen von Lösungsmitteln stattfinden kann
d) Weiterverarbeitung des gereinigten Chlorwasserstoffs zu Chlor durch partielle Oxidation wobei der in Schritt a) bereitgestellte Chlorwasserstoff organische und/oder stickstoffhaltige Verunreinigungen enthält und
wobei in Schritt b) die Reinigung derart erfolgt, dass Chlorwasserstoff wenigstens in einem ersten Gaswäscher mit hinsichtlich der Aufnahme von Chlorwasserstoff zu ≥ 90% gesättigter Salzsäure kontaktiert wird und diese Salzsäure zumindest teilweise durch den ersten Gaswäscher zirkuliert wird.

Es wurde gefunden, dass sich durch Zirkulieren der konzentrierten Salzsäure im ersten Gaswäscher insbesondere organische und stickstoffhaltige Verunreinigungen, die bei der Isocyanatherstellung anfallen können, aus dem Chlorwasserstoff entfernen lassen. Vorzugsweise erfolgt das Zirkulieren der Salzsäure im Gegenstrom zur Strömungsrichtung des Chlorwasserstoffs.

Im gemäß Schritt a) bereitgestellten Chlorwasserstoff lassen sich sowohl organische Verunreinigungen als auch stickstoffhaltige Verunreinigungen mittels katalytischer Oxidation mit anschließender NDIR-Detektion/DIN EN 12260 bestimmen, wie sie untenstehend im experimentellen Teil beschrieben wird.

Die Analysenmethoden lassen sich auch für die Bestimmung der weiteren im Rahmen der vorliegenden Erfindung angegebenen Parameter Gesamtkohlenstoffgehalt (TC), Gesamtgehalt an organischem Kohlenstoff (TOC) und Gesamtstickstoffgehalt (TN) heranziehen.

Das gemäß Schritt a) der Chlorwasserstoff organische und/oder stickstoffhaltige Verunreinigungen enthält bedeutet insbesondere, dass sie durch die genannten Analysenmethoden nachweisbar sind.

Wie aus der untenstehenden Analysenvorschrift im experimentellen Teil ersichtlich, werden die vorstehend genannten Verunreinigungen und Parameter vorzugsweise über eine Analyse der zur Reinigung eingesetzten, hinsichtlich der Aufnahme von Chlorwasserstoff zu ≥ 90% gesättigten Salzsäure bestimmt.

Der Begriff "hinsichtlich der Aufnahme von Chlorwasserstoff zu ≥ 90% gesättigter Salzsäure" bedeutet im Kontext des erfindungsgemäßen Verfahrens und des erfindungsgemäßen Systems, welches später beschrieben werden wird, dass unter den in Schritt b) herrschenden Prozessbedingungen wie Druck, Temperatur, etc. die Salzsäure ≥ 90 Gewichts-% der theoretisch möglichen Menge an Chlorwasserstoff aufgenommen und insbesondere gelöst hat. Vorzugsweise beträgt dieser Wert ≥ 95 Gewichts-% und mehr bevorzugt ≥ 99 Gewichts-%. Selbstverständlich beträgt die obere Grenze ≤ 100 Gewichts-%. und besonders bevorzugt handelt es sich um hinsichtlich der Aufnahme von Chlorwasserstoff gesättigte Salzsäure. Im erfindungsgemäßen Verfahren wird die zur Reinigung des Chlorwasserstoffs eingesetzte Salzsäure durch Chlorwasserstoff-Aufnahme in der Regel sehr schnell gesättigt werden. Falls gewünscht, kann der Betreiber des Verfahrens jedoch auch die erwähnte nicht vollständig gesättigte Salzsäure in den ersten Gaswäscher einspeisen.

Gemäß Schritt c) des erfindungsgemäßen Verfahrens kann der erhaltene gereinigte Chlorwasserstoff zur Herstellung von hochreiner Salzsäure verwendet werden, wie sie zum Beispiel in der Elektronikindustrie benötigt wird.

Der alternative Schritt d) des erfindungsgemäßen Verfahrens sieht eine partielle Oxidation zu Chlor, vorzugsweise gemäß dem Deacon-Verfahren, vor. Dieses Chlorgas kann wieder zur Phosgenherstellung und somit zur Phosgenierung von Aminen rezykliert werden.

Ausführungsformen und weitere Aspekte der vorliegenden Erfindung werden nachfolgend erläutert. Sie können beliebig miteinander kombiniert werden, sofern sich aus dem Kontext nicht eindeutig das Gegenteil ergibt.

In einer Ausführungsform des erfindungsgemäßen Verfahrens ist der erste Gaswäscher als Absorbtionskolonne ausgeführt. Vorzugsweise wird hier das Kontaktieren gemäß Schritt b) isotherm durchgeführt. Hierzu kann der erste Gaswäscher mit einer Kühleinrichtung versehen sein. Weiterhin ist es bevorzugt, dass die Absorptionskolonne eine Packung oder Schüttung enthält. Diese kann beispielsweise durch Raschigringe mit einem Durchmesser zwischen 1 mm und 20 mm realisiert werden. So wird auch ein möglichst geringer Druckverlust angestrebt. Für großtechnische Anwendungen kann die Packungshöhe 2 m bis 5 m und vorzugsweise ca. 3 m betragen. In der Absorptionskolonne kann eine Flüssigkeitsbelastung von mindestens 10 m³/m²h oder mindestens 25 m³/m²h eingestellt werden. Die Absorbtionskolonne kann weiterhin einen Demister am Kopfende aufweisen.

In einer weiteren Ausführungsform des erfindungsgemäßen Verfahrens weist der in Schritt a) bereitgestellte und in Schritt b) zu reinigende Chlorwasserstoff zumindest zeitweise einen Gehalt an Verunreinigungen, ausgedrückt als Gesamtstickstoffgehalt (TN), von ≥ 15 ppm (vorzugsweise ≥ 30 ppm) auf und/oder zumindest zeitweise einen Gehalt an Verunreinigungen, ausgedrückt als Gesamtgehalt an organischem Kohlenstoff (TOC), von ≥ 15 ppm (vorzugsweise ≥ 30 ppm) auf.

Hierbei ist es ganz besonders bevorzugt, wenn der in Schritt a) bereitgestellte und in Schritt b) zu reinigende Chlorwasserstoff zumindest zeitweise einen Gehalt an Verunreinigungen, ausgedrückt als Gesamtstickstoffgehalt (TN), von ≥ 15 ppm (vorzugsweise ≥ 30 ppm) und Gesamtgehalt an organischem Kohlenstoff (TOC), von ≥ 15 ppm (vorzugsweise ≥ 30 ppm) aufweist.

In einer weiteren Ausführungsform des erfindungsgemäßen Verfahrens weist der in Schritt a) bereitgestellte und in Schritt b) zu reinigende Chlorwasserstoff einen Gehalt an Verunreinigungen, ausgedrückt als Verhältnis des Gesamtstickstoffgehalts (TN) zum Gesamtgehalt an organischem Kohlenstoff (TOC), von ≥ 1:2 bis ≤ 2:1, vorzugsweise ≥ 0.9:1.1 bis ≤ 1.1:0.9, auf.

In einer weiteren Ausführungsform des erfindungsgemäßen Verfahrens weist die nach Schritt c) erhaltene Salzsäure einen Gehalt an Verunreinigungen, ausgedrückt als Gesamtstickstoffgehalt (TN), von ≤ 5 ppm (vorzugsweise ≤ 1 ppm) auf und/oder einen Gehalt an Verunreinigungen, ausgedrückt als Gesamtgehalt an organischem Kohlenstoff (TOC), von ≤ 5 ppm (vorzugsweise ≤ 1 ppm) auf.

In einer weiteren Ausführungsform des erfindungsgemäßen Verfahrens wird der in Schritt a) bereitgestellte und in Schritt b) zu reinigende Chlorwasserstoff aus der Herstellung von Isocyanaten durch Reaktion von Aminen mit Phosgen erhalten. Beispiele für solche Amine sind HDA (1,6-Hexamethylendiamin), IPDA (Isophorondiamin), XDA (Xylylendiamin), PDA (1,2-Propylendiamin), NDA (Naphthylendiamin), MDA (Methylendiphenyldiamin) sowie TDA (Toluylendiamin). Aliphatische Amine sind bevorzugt. Generell ist es auch bevorzugt, dass der Chlorwasserstoff aus der Gasphasenphosgenierung von aliphatischen Aminen stammt.

In einer weiteren Ausführungsform des erfindungsgemäßen Verfahrens umfasst Schritt b) weiterhin:
- Reinigen des aus dem ersten Gaswäscher erhaltenen Chlorwasserstoffs, indem dieser Chlorwasserstoff in einem zweiten Gaswäscher mit hinsichtlich der Aufnahme von Chlorwasserstoff zu ≥ 90% gesättigter Salzsäure kontaktiert wird und diese Salzsäure zumindest teilweise durch den zweiten Gaswäscher zirkuliert wird.

Anschließend kann der aus dem zweiten Gaswäscher austretende doppelt gereinigte Chlorwasserstoff in Schritt c) oder Schritt d) des erfindungsgemäßen Verfahrens überführt werden.

Der zweite Gaswäscher kann die gleichen Details und Betriebsarten aufweisen wie der erste Gaswäscher. Zur Vermeidung unnötiger Wiederholungen sollen sie nicht erneut aufgeführt werden. Insbesondere kann der zweite Gaswäscher auch eine zuvor bereits beschriebene Absorptionskolonne sein und im Gegenstrom zum Chlorwasserstoff-Strom beschrieben werden.

Ein weiterer Gegenstand der vorliegenden Erfindung ist ein System zur Verarbeitung von Chlorwasserstoff aus der Isocyanatherstellung, umfassend:
- mindestens einen ersten Gaswäscher mit einer ihm zugeordneten Fördereinrichtung, wobei der Gaswäscher eingerichtet ist, um Chlorwasserstoff-Gas und hinsichtlich der Aufnahme von Chlorwasserstoff zu ≥ 90% gesättigte Salzsäure miteinander zu kontaktieren, wobei gereinigter Chlorwasserstoff erhalten wird;
wobei die dem jeweiligen Gaswäscher zugeordnete Fördereinrichtung eingerichtet ist, um hinsichtlich der Aufnahme von Chlorwasserstoff zu ≥ 90% gesättigte Salzsäure zumindest teilweise durch den jeweiligen Gaswäscher zirkulieren zu lassen, wobei dieses vorzugsweise unter Kühlung geschieht;
sowie eine Absorptionskolonne oder einen Oxidationsreaktor, wobei
- die Absorptionskolonne eingerichtet ist, um aus einem Gaswäscher des Systems entnommenen Chlorwasserstoff mit Wasser und/oder mit hinsichtlich der Aufnahme von Chlorwasserstoff nicht gesättigter Salzsäure zu kontaktieren;
- der Oxidationsreaktor eingerichtet ist, um um aus einem Gaswäscher entnommenen Chlorwasserstoff durch partielle Oxidation zu Chlor umzusetzen, wobei dieses bevorzugt nach einer Trocknung des Chlorwasserstoffs geschieht. , dadurch gekennzeichnet, dass der erste Gaswäscher (10) als Packungskolonne ausgeführt und weiterhin ein erster Salzsäure-Tank (20) vorgesehen ist, in welchem hinsichtlich der Aufnahme von Chlorwasserstoff gesättigte Salzsäure, welche den ersten Gaswäscher (10) durchlaufen hat, gesammelt wird und mittels der Fördereinrichtung (30) erneut auf den ersten Gaswäscher (10) aufgegeben wird.

In der Absorptionskolonne lässt sich der Chlorwasserstoff zu Salzsäure weiterverarbeiten. Der Oxidationsreaktor überführt den Chlorwasserstoff, bevorzugt nach dem Deacon-Verfahren, wieder zu Chlor, welches erneut zu Phosgen umgesetzt werden kann.

In einer Ausführungsform des erfindungsgemäßen Systems werden die hinsichtlich der Aufnahme von Chlorwasserstoff zu ≥ 90% gesättigte Salzsäure und das Chlorwasserstoff-Gas im ersten Gaswäscher im Gegenstrom zueinander geführt. Dieses kann selbstverständlich auch bei einem zweiten Gaswäscher der Fall sein.

In dem erfindungsgemäßen System ist der erste Gaswäscher als Packungskolonne ausgeführt. Diese kann beispielsweise durch Raschigringe mit einem Durchmesser zwischen 1 mm und 20 mm realisiert werden. So wird auch ein möglichst geringer Druckverlust angestrebt. Für großtechnische Anwendungen kann die Packungshöhe 2 m bis 5 m und vorzugsweise ca. 3 m betragen. In der Absorptionskolonne kann eine Flüssigkeitsbelastung von mindestens 10 m³/m²h oder mindestens 25 m³/m²h eingestellt werden. Die Kolonne kann weiterhin einen Demister am Kopfende aufweisen. Dieses kann selbstverständlich auch bei einem zweiten Gaswäscher der Fall sein.

In dem erfindungsgemäßen System ist weiterhin ein erster Salzsäure-Tank vorgesehen, in welchem hinsichtlich der Aufnahme von Chlorwasserstoff gesättigte Salzsäure, welche den ersten Gaswäscher durchlaufen hat, gesammelt wird und mittels der Fördereinrichtung erneut auf den ersten Gaswäscher aufgegeben wird. Vorzugsweise geschieht dieses auch unter Kühlung. Es ist weiter bevorzugt, dass aus diesem Salzsäuretank verunreinigte Salzsäure ausgeschleust werden kann und dieser Tank durch frische Salzsäure und/oder Wasser, bevorzugt Salzsäure, wieder aufgefüllt werden kann. Der ausgeschleuste Strom kann beispielsweise maximal 20% der eingesetzten Salzsäure enthalten. Dieses kann selbstverständlich auch bei einem zweiten Gaswäscher der Fall sein.

In einer weiteren Ausführungsform des erfindungsgemäßen Systems umfasst dieses weiterhin:
- einen zweiten Gaswäscher mit einer ihm zugeordneten Fördereinrichtung, wobei der Gaswäscher eingerichtet ist, um Chlorwasserstoff-Gas und hinsichtlich der Aufnahme von Chlorwasserstoff zu ≥ 90% gesättigte Salzsäure miteinander zu kontaktieren, wobei gereinigter Chlorwasserstoff erhalten wird;
wobei die dem zweiten Gaswäscher zugeordnete Fördereinrichtung eingerichtet ist, um hinsichtlich der Aufnahme von Chlorwasserstoff zu ≥ 90% gesättigte Salzsäure zumindest teilweise durch den zweiten Gaswäscher zirkulieren zu lassen, wobei dieses vorzugsweise unter Kühlung geschieht;
wobei das System eingerichtet ist, um aus dem ersten Gaswäscher entnommenen Chlorwasserstoff in den zweiten Gaswäscher einzuleiten.

Auf diese Weise kann ein Kaskadieren der Reinigungsschritte erreicht werden. Selbstverständlich ist eine Kaskade von mehr als zwei Gaswäscheschritten der erfindungsgemäßen Art ebenfalls möglich.

Die vorliegende Erfindung wird mit Bezug auf die nachfolgenden Figuren und Beispiele näher erläutert, ohne jedoch darauf festgelegt zu sein. Es zeigen:
- FIG. 1: schematisch eine Anlage zur Durchführung des erfindungsgemäßen Verfahrens
- FIG. 2: schematisch eine weitere Anlage zur Durchführung des erfindungsgemäßen Verfahrens
- FIG. 3: die Akkumulation der TN und TOC verursachenden Komponenten in Beispiel 1
- FIG. 4: die Akkumulation der TN und TOC verursachenden Komponenten in Beispiel 2

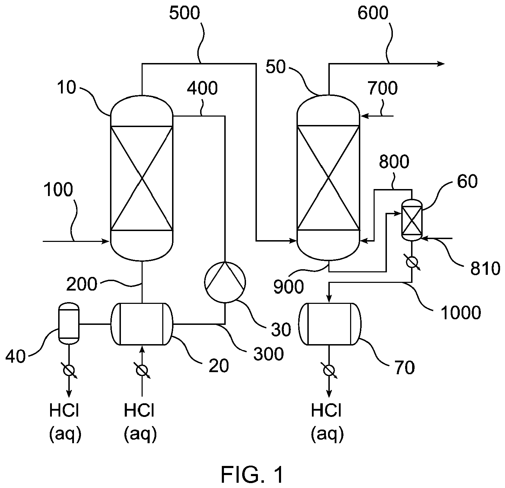

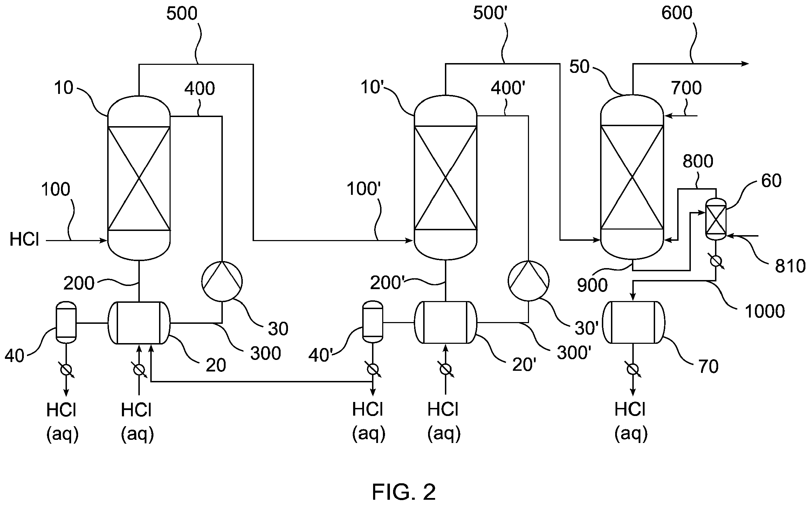

In FIG. 1 und FIG. 2 bedeutet die Bezeichnung "HCl (aq)" in Wasser gelöstes Chlorwasserstoffgas und somit Salzsäure, ohne auf wässrige oder verdünnte Salzsäure eingeschränkt zu sein. Diese Bezeichnung wurde gewählt, um eine Unterscheidung zum gasförmigen Chlorwasserstoff treffen zu können.

FIG. 1 zeigt schematisch eine Anlage zur Durchführung des erfindungsgemäßen Verfahrens. Der erste Gaswäscher 10 ist hierbei als Packungskolonne ausgeführt. Chlorwasserstoff-Gas wird über Stoffstrom 100 auf den Boden der Kolonne aufgegeben. In einem ersten Vorratstank 20 liegt konzentrierte Salzsäure vor. Diese ist hinsichtlich der Aufnahme von Chlorwasserstoff gesättigt (oder wird im Laufe der Gaswäsche in der Kolonne 10 gesättigt werden, bevor sie die Kolonne verlässt). Die Salzsäure aus dem ersten Vorratstank 20 tritt in die Pumpe 30 als Stoffstrom 300 und wird nach der Pumpe 30 als Stoffstrom 400 auf den Kopf der Kolonne 10 aufgegeben.

Nach dem Durchlaufen der Kolonne 10 verlässt die konzentrierte Salzsäure mittels Stoffstrom 200 den Gaswäscher 10. Anschließend kann die in dem ersten Vorratstank 20 gesammelte Salzsäure wieder durch den Gaswäscher 10 zirkuliert werden. Während der Gaswäsche reichern sich Verunreinigungen in der Salzsäure an.

Es ist vorgesehen, aus dem zweiten Salzsäure-Tank 40, welcher mit dem ersten Salzsäure-Tank 20 verbunden ist, entsprechend konzentrierte und Verunreinigungen enthaltene Salzsäure auszuschleusen. Zum Ausgleich des entnommenen Volumens kann Salzsäure und/oder Wasser, bevorzugt Salzsäure, weiterhin in den ersten Salzsäure-Tank 20 nachgefüllt werden.

Am Kopf des ersten Gaswäschers 10 wird weiterhin mittels Stoffstrom 500 gereinigtes Chlorwasserstoff-Gas entnommen. Dieses kann dann in einem nachfolgenden Schritt zur Herstellung von Salzsäure mit einem erhöhten Reinheitsgrad verwendet werden. Hierzu wird das Chlorwasserstoff-Gas in eine Kolonne 50 eingeleitet, in der es mit Wasser oder mit verdünnter Salzsäure, beide Male jeweils mittels Stoffstrom 700 am Kopf der Kolonne, in Kontakt gebracht wird. Am Kopf der Kolonne 50 können Abgase mittels Stoffstrom 600 einer Entsorgung zugeführt werden.

Es ist weiterhin möglich, die aus der der Kolonne 50 ablaufende Salzsäure mit Stoffstrom 900 über eine Strippkolonne 60 zu führen. Durch diese Kolonne wird im Gegenstrom Dampf geleitet (Stoffstrom 810), um verbliebene flüchtige Organika aus der Säure zu entfernen. Der am Kolonnenkopf entnommene beladene Dampfstrom 800 wird auf den Sumpf der Absorptionskolonne 50 geführt. Der aus der Strippkolonne 60 ablaufende gereinigte Salzsäurestrom 1000 wird abgekühlt und in einen Vorratsbehälter 70 geführt. Von dort wird die Säure der weiteren Verarbeitung zugeführt.

FIG. 2 zeigt schematisch eine weitere Anlage zur Durchführung des erfindungsgemäßen Verfahrens. In dieser Figur ist gezeigt, wie mehrere Gaswäsche-Schritte kaskadiert werden können, um einen noch höheren Reinheitsgrad des Chlorwasserstoff-Gases erreichen zu können. Aufbauend aus der in Figur eins gezeigten Anlage, welche zur Vermeidung von Wiederholungen nicht erneut beschrieben werden soll, ist dem ersten Gaswäscher 10 eine zweite Reinigungsanlage nachgeschaltet, welche vorgereinigtes Chlorwasserstoff-Gas mittels Stoffstrom 100' aus dem ersten Gaswäscher 10 aufnimmt.

Der zweite Gaswäscher 10' ist hierbei als Packungskolonne ausgeführt. Chlorwasserstoff-Gas wird über Stoffstrom 100' auf den Boden der Kolonne aufgegeben. In einem zweiten Vorratstank 20' liegt konzentrierte Salzsäure vor. Diese ist hinsichtlich der Aufnahme von Chlorwasserstoff gesättigt (oder wird im Laufe der Gaswäsche in der Kolonne 10' gesättigt werden, bevor sie die Kolonne verlässt). Die Salzsäure aus dem zweiten Vorratstank 20' tritt in die Pumpe 30' als Stoffstrom 300' und wird nach der Pumpe 30' als Stoffstrom 400' auf den Kopf der Kolonne 10' aufgegeben.

Nach dem Durchlaufen der Kolonne 10' verlässt die konzentrierte Salzsäure mittels Stoffstrom 200' den Gaswäscher 10'. Anschließend kann die in dem ersten Vorratstank 20' gesammelte Salzsäure wieder durch den Gaswäscher 10' zirkuliert werden. Während der Gaswäsche reichern sich Verunreinigungen in der Salzsäure an.

Es ist vorgesehen, aus dem zweiten Salzsäure-Tank 40', welcher mit dem ersten Salzsäure-Tank 20' verbunden ist, entsprechen konzentrierte und Verunreinigungen enthaltene Salzsäure auszuschleusen. Zum Ausgleich des entnommenen Volumens kann Salzsäure und/oder Wasser, bevorzugt Salzsäure, weiterhin in den ersten Salzsäure-Tank 20' nachgefüllt werden.

Am Kopf des ersten Gaswäschers 10' wird weiterhin mittels Stoffstrom 500' gereinigtes Chlorwasserstoff-Gas entnommen.

### Beispiele

### Analysenvorschrift:

1) Anwendungsbereich:
   Diese Methode gilt für Salzsäuren
2) Grundlage:
   TOC Gerät mit angeschlossener TN Einheit

Die Abkürzung TOC steht für "Total Organic Carbon", also dem gesamten organischen Kohlenstoffanteil einer Probe. Bei Salzsäure wird jedoch der TC (Total Carbon)-Gehalt der Probe bestimmt. Allerdings kann im Rahmen der vorliegenden Erfindung der TOC-Gehalt mit dem TC-Gehalt gleichgesetzt werden, da insbesondere bei der Phosgenierung von Aminen keine Quellen von anorganischem oder elementarem Kohlenstoff vorliegen.

Der gesamte anorganische-(IC), organische-(TOC) und elementare Kohlenstoff wird generell zu CO₂ oxidiert (schematisch):

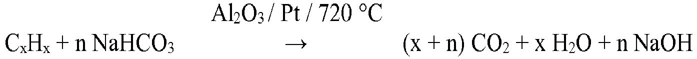

Das gebildete CO₂ wird mittels eines Trägergasstromes (synthetische Luft) in einen NDIR-Detektor (nicht-dispersives-Infrarot) überführt und dort quantitativ vermessen.

Unter dem TN-Wert versteht man den gesamten Stickstoffanteil einer Probe. Hierfür wird das Verfahren der Verbrennung mit anschließender Chemolumineszenz-Detektion (CLD) verwendet. Dabei wird die Probe katalytisch bei 720 °C verbrannt und Stickstoffkomponenten zu NO umgesetzt:

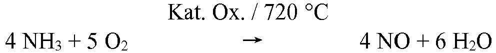

Das gebildete NO wird zum Zwecke der Detektion mit Ozon umgesetzt:

NO + O₃ → NO₂^{∗} + O₂

Während dieser Reaktion werden Lichtquanten freigesetzt (Chemolumineszenz), die vom Detektor vermessen werden: 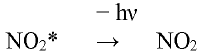
3) Reagenzien:
   Als Wasser wird Milliporewasser verwendet
4) Geräte:
   4.1) Laborübliche Geräte
   4.2) TOC Gerät mit angeschlossener TN Einheit
5) Ausführung:
   Etwa 30 ml Milliporewasser in einem 100 ml Messkolben vorlegen und anschließend 50 ml der zu bestimmenden Salzsäure zupipettieren. Nach dem Abkühlen auf 20°C füllt man den Messkolben mit Milliporewasser auf.

Die Messung der Probe erfolgt am TOC-Gerät mit angeschlossener TN-Einheit. Setzt man die Verdünnung auf 2 erhält man als Ergebnis Totaler Kohlenstoff und Gesamt Stickstoff in mg/L.
6) Berechnung:
Das Ergebnis wird vom Gerät automatisch als Massekonzentration in mg/L ausgegeben.

### Beispiel 1

In einem ersten Beispiel wurde ein Waschkolonne umfassend zwei in Reihe geschaltete Glassäulen ("Wäscher 1" und "Wäscher 2") mit 50 mm Durchmesser und 500 mm Schüttung (Raschig-Ringe 4 mm) installiert. Unter beiden Glassäulen befand sich ein Vorlagebehälter für die Waschflüssigkeit mit einem Volumen von 5 1. Aus diesem Behälter wurde der Umlauf für die Waschflüssigkeit entnommen und parallel auf beide Glassäulen geführt. Durch die Waschkolonne wurde ein Volumenstrom an zu reinigendem HCl-Gas von 190 bis 250 l/h geführt. Die Konzentrationen an TOC- und TN-Verunreinigungen in dem zu reinigenden HCl-Gas lag jeweils im Bereich von 44 bis 71 mg/kg. Der Volumenstrom der Waschflüssigkeit betrug 30 bis 45 l/h, was einer Flüssigbelastung von etwa 23 m³/m²h in den Schüttungen entspricht.

Hinter dieser Waschkolonne wurde eine zweite Wäschereinheit installiert, um Aussagen zu den im HCl-Gasstrom verbliebenen Verunreinigungen zu erhalten. Diese bestand aus einer Glassäule mit 50 mm Durchmesser und 500 mm Schüttung (Raschig-Ringe 4 mm). Unter dieser Glassäule befand sich ein Vorlagebehälter mit einem Volumen von 21, aus dem der Umlauf für die Waschflüssigkeit entnommen und auf die Glassäule geführt wurde. Durch diese nachgeschaltete Waschkolonne wurde der gleiche Volumenstrom an zu reinigendem HCl-Gas von 190 bis 250 l/h geführt. Der Volumenstrom der Waschflüssigkeit betrug ebenfalls 30 bis 45 l/h, was einer Flüssigbelastung von etwa 23 m³/m²h in den Schüttungen entspricht.

Im Ergebnis dieses ersten Beispiels wurde eine konstante Akkumulation der Verunreinigungen in der Vorlage der ersten Waschkolonne gefunden. Diese Verunreinigungen konnten bis zu einem Gehalt von 2 g/l angereichert werden, ohne Abnahme der Waschwirkung zu beobachten. In der nachgeschalteten nahezu baugleichen zweiten Wäschereinheit wurden dagegen nur geringe Mengen an Verunreinigungen gefunden.

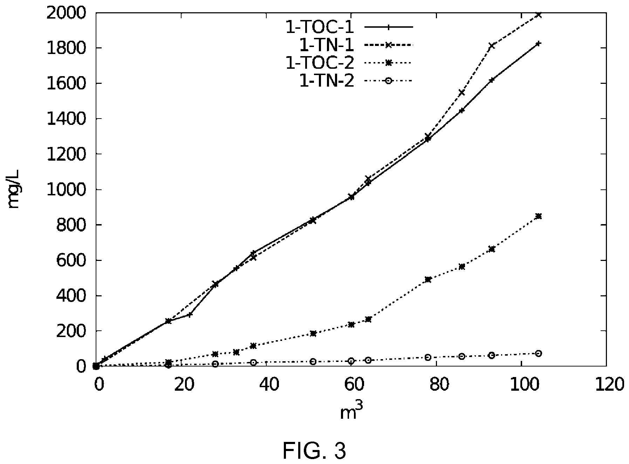

Die nachfolgende Tabelle, welche auch graphisch in FIG. 3 abgebildet ist, zeigt die Akkumulation der TN und TOC verursachenden Komponenten in den Sumpfbehältern der ersten und zweiten Waschkolonne, aufgetragen über dem durchgesetzten Gasvolumen für Beispiel 1. Im Ergebnis wurde eine Trennwirkung für die TN-Verunreinigungen von mindestens 98,5% und für die TOC-Verunreinigungen von mindestens 86,2% gefunden.

| **Durchgesetzte Gasmenge [m³]** | **Wäscher 1** | | **Wäscher 2** | |
|---|---|---|---|---|
| | **TOC [mg/L]** | **TN [mg/L]** | **TOC [mg/L]** | **TN [mg/L]** |
| 0 | 4,3 | 0,1 | 4,2 | 0,1 |
| 2,7 | 43 | | | |
| 17,6 | 257 | 257 | 23 | 8,9 |
| 22,9 | 294 | | | |
| 28,3 | 460 | 468 | 69 | 13 |
| 33,5 | 556 | | 80 | |
| 37,7 | 643 | 616 | 116 | 22 |
| 51,2 | 833 | 824 | 186 | 27 |
| 60,3 | 956 | 961 | 238 | 31 |
| 64,9 | 1036 | 1063 | 268 | 35 |
| 78,0 | 1281 | 1300 | 491 | 51 |
| 86,1 | 1446 | 1548 | 565 | 56 |
| 93,3 | 1618 | 1812 | 664 | 62 |
| 104,7 | 1825 | 1988 | 849 | 73 |

In FIG. 3 bedeuten die Kurven mit den Bezugszeichen:
- 1-TOC-1: TOC-Gehalt Wäscher 1
- 1-TN-1: TN-Gehalt Wäscher 1
- 1-TOC-2: TOC-Gehalt Wäscher 2
- 1-TN-2: TN-Gehalt Wäscher 2

### Beispiel 2

In einem zweiten Beispiel wurde ein Waschkolonne umfassend aus zwei in Reihe geschaltete Glassäulen mit 100 mm Durchmesser und 500 mm Schüttung (Raschig-Ringe 12 mm) installiert. Unter beiden Glassäulen befand sich ein Vorlagebehälter für die Waschflüssigkeit mit einem Volumen von 10 1. Aus diesem Behälter wurde der Umlauf für die Waschflüssigkeit entnommen und parallel auf beide Glassäulen geführt. Durch die Waschkolonne wurde ein Volumenstrom an zu reinigendem HCl-Gas von 2500 bis 3000 l/h geführt. Die Konzentrationen an TOC- und TN-Verunreinigungen in dem zu reinigenden HCl-Gas lag jeweils im Bereich von 27 bis 42 mg/kg. Der Volumenstrom der Waschflüssigkeit betrug 150 bis 200 l/h was einer Flüssigbelastung von etwa 26 m³/m²h in den Schüttungen entspricht. Am Gasausgang der ersten Wäschereinheit wurde ein Tropfenabscheider installiert, um den Austrag von beladener Waschflüssigkeit mit dem gereinigten HCl-Gasstrom zu vermeiden.

Hinter dieser Waschkolonne wurde eine zweite Wäschereinheit installiert, um Aussagen zu den im HCl-Gasstrom verbliebenen Verunreinigungen zu erhalten. Diese bestand aus einer Glassäule mit 100 mm Durchmesser und 500 mm Schüttung (Raschig-Ringe 12 mm). Unter dieser Glassäule befand sich ein Vorlagebehälter mit einem Volumen von 5 1, aus dem der Umlauf für die Waschflüssigkeit entnommen und auf die Glassäule geführt wurde. Durch diese nachgeschaltete Waschkolonne wurde der gleiche Volumenstrom an zu reinigendem HCl-Gas von 190 bis 250 l/h geführt. Der Volumenstrom der Waschflüssigkeit betrug ebenfalls 30 bis 45 l/h was einer Flüssigbelastung von etwa 23 m³/m²h in den Schüttungen entspricht.

Im Ergebnis dieser zweiten Ausführung wurde ebenfalls eine quasi konstante Akkumulation der Verunreinigungen in der Vorlage der ersten Waschkolonne gefunden. Diese Verunreinigungen konnten bis zu einem Gehalt von etwa 3 g/l angereichert werden, ohne Abnahme der Waschwirkung zu beobachten. In der nachgeschalteten nahezu baugleichen zweiten Wäschereinheit wurden dagegen nur geringe Mengen an Verunreinigungen gefunden.

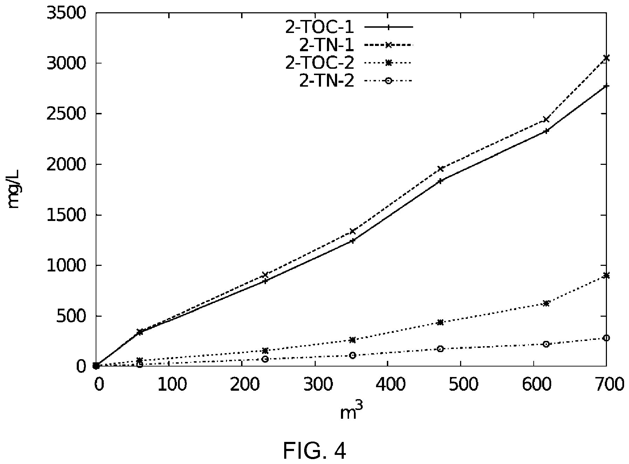

Die nachfolgende Tabelle, welche auch graphisch in FIG. 4abgebildet ist, zeigt die Akkumulation der TN und TOC verursachenden Komponenten in den Sumpfbehältern der ersten und zweiten Waschkolonne, aufgetragen über dem durchgesetzten Gasvolumen für Beispiel 2. Im Ergebnis wurde eine Trennwirkung für die TN-Verunreinigungen von mindestens 95,2% und für die TOC-Verunreinigungen von mindestens 84,8% gefunden.

| **Durchgesetzte Gasmenge [m³]** | **Wäscher 1** | | **Wäscher 2** | |
|---|---|---|---|---|
| | **TOC [mg/L]** | **TN [mg/L]** | **TOC [mg/L]** | **TN [mg/L]** |
| 0 | 9,7 | 5,3 | 9,7 | 5,3 |
| 60 | 334,6 | 343,2 | 57,7 | 19,2 |
| 232,5 | 845 | 906,3 | 156 | 72,1 |
| 352,5 | 1244,8 | 1338,9 | 262,9 | 109,6 |
| 472,5 | 1836 | 1956 | 437 | 172 |
| 617,5 | 2325,7 | 2443 | 624,7 | 220,3 |
| 700 | 2775,6 | 3052,8 | 901,1 | 281,3 |

In FIG. 4 bedeuten die Kurven mit den Bezugszeichen:
2-TOC-1 TOC-Gehalt Wäscher 1
2-TN-1 TN-Gehalt Wäscher 1
2-TOC-2 TOC-Gehalt Wäscher 2
2-TN-2 TN-Gehalt Wäscher 2

### Vergleichsbeispiel

Als zunächst naheliegendes Verfahren zur Reinigung von organischen Verbindungen aus wässriger HCl wurden ebenfalls Adsorptionsversuche durchgeführt. Dabei wurden verschiedenste handelsübliche Aktivkohlen mit unterschiedlichen Porenstrukturen, Basismaterialien und Oberflächenbehandlungen mit TOC- und TN-Verunreinigungen enthaltender wässriger HCl kontaktiert. Diese Versuche wurden bei Raumtemperatur über 3 Tage als Schüttelversuch durchgeführt. Allerdings wurde kein Reinigungseffekt bezüglich der vorliegenden TN-Verunreinigungen und TOC-Verunreinigungen gefunden, wie die nachfolgende Tabelle zeigt:

| **verwendete Aktivkohle** | **eingesetzte Menge an Aktivkohle [g/L]** | **TOC-Verunreinigung [ mg/L ]** | **TN-Verunreinigung [ mg/L ]** |
|---|---|---|---|
| unbehandelte HCl (Nullprobe) | - | 12 | 12 |
| Hydraffin CC 12×40 spezial | 10 | 12 | 12 |
| | 50 | 10 | 12 |
| Epibon X 12×40 spezial | 50 | 14 | 15 |
| | 50 | 11 | 12 |
| Filtrasorb 300 | 50 | 11 | 11 |
| CPG LF | 10 | 12 | 12 |
| | 50 | 11 | 12 |
| Aquacarb 207C 12×30 | 50 | 25 | 12 |
| Lewatit AF 5 | 10 | 12 | 12 |
| | 50 | 10 | 12 |

## Patentansprüche

1. Verfahren zur Verarbeitung von Chlorwasserstoff aus der Isocyanatherstellung, umfassend die Schritte:
a) Bereitstellen von Chlorwasserstoff
b) Reinigen des bereitgestellten Chlorwasserstoffs
sowie weiterhin umfassend Schritt c) oder Schritt d):
c) Kontaktieren des gereinigten Chlorwasserstoffs mit Wasser und/oder mit hinsichtlich der Aufnahme von Chlorwasserstoff nicht gesättigter Salzsäure
d) Weiterverarbeitung des gereinigten Chlorwasserstoffs zu Chlor durch partielle Oxidation **dadurch gekennzeichnet, dass**
der in Schritt a) bereitgestellte Chlorwasserstoff organische und/oder stickstoffhaltige Verunreinigungen enthält und
wobei in Schritt b) die Reinigung derart erfolgt, dass Chlorwasserstoff wenigstens in einem ersten Gaswäscher (10) mit hinsichtlich der Aufnahme von Chlorwasserstoff zu ≥ 90% gesättigter Salzsäure kontaktiert wird und diese Salzsäure zumindest teilweise durch den ersten Gaswäscher (10) zirkuliert wird.

2. Verfahren gemäß Anspruch 1, wobei der erste Gaswäscher (10) als Absorbtionskolonne ausgeführt ist.

3. Verfahren gemäß Anspruch 1 oder 2, wobei der in Schritt a) bereitgestellte und in Schritt b) zu reinigende Chlorwasserstoff zumindest zeitweise einen Gehalt an Verunreinigungen, ausgedrückt als Gesamtstickstoffgehalt (TN), von ≥ 15 ppm und/oder zumindest zeitweise einen Gehalt an Verunreinigungen, ausgedrückt als Gesamtgehalt an organischem Kohlenstoff (TOC), von ≥ 15 ppm aufweist.

4. Verfahren gemäß einem oder mehreren der Ansprüche 1 bis 3, wobei der in Schritt a) bereitgestellte und in Schritt b) zu reinigende Chlorwasserstoff einen Gehalt an Verunreinigungen, ausgedrückt als Verhältnis des Gesamtstickstoffgehalts (TN) zum Gesamtgehalt an organischem Kohlenstoff (TOC), von ≥ 1:2 bis ≤ 2:1 aufweist.

5. Verfahren gemäß einem oder mehreren der Ansprüche 1 bis 4, wobei die nach Schritt c) erhaltene Salzsäure einen Gehalt an Verunreinigungen, ausgedrückt als Gesamtstickstoffgehalt (TN), von ≤ 5 ppm aufweist und/oder einen Gehalt an Verunreinigungen, ausgedrückt als Gesamtgehalt an organischem Kohlenstoff (TOC), von ≤ 5 ppm aufweist.

6. Verfahren gemäß einem oder mehreren der Ansprüche 1 bis 5, wobei der in Schritt a) bereitgestellte und in Schritt b) zu reinigende Chlorwasserstoff aus der Herstellung von Isocyanaten durch Reaktion von Aminen mit Phosgen erhalten wird.

7. Verfahren gemäß Anspruch 6, wobei die Amine aliphatische Amine sind.

8. Verfahren gemäß einem oder mehreren der Ansprüche 1 bis 7, wobei Schritt b) weiterhin umfasst:
- Reinigen des aus dem ersten Gaswäscher (10) erhaltenen Chlorwasserstoffs, indem dieser Chlorwasserstoff in einem zweiten Gaswäscher (10') mit hinsichtlich der Aufnahme von Chlorwasserstoff zu ≥ 90% gesättigter Salzsäure kontaktiert wird und diese Salzsäure zumindest teilweise durch den zweiten Gaswäscher (10') zirkuliert wird.

9. System zur Verarbeitung von Chlorwasserstoff aus der Isocyanatherstellung, umfassend:
- mindestens einen ersten Gaswäscher (10) mit einer ihm zugeordneten Fördereinrichtung (30), wobei der Gaswäscher eingerichtet ist, um Chlorwasserstoff-Gas und hinsichtlich der Aufnahme von Chlorwasserstoff zu ≥ 90% gesättigte Salzsäure miteinander zu kontaktieren, wobei gereinigter Chlorwasserstoff erhalten wird;
wobei die dem jeweiligen Gaswäscher zugeordnete Fördereinrichtung eingerichtet ist, um hinsichtlich der Aufnahme von Chlorwasserstoff zu ≥ 90% gesättigte Salzsäure zumindest teilweise durch den jeweiligen Gaswäscher zirkulieren zu lassen;
sowie eine Absorptionskolonne (50) oder einen Oxidationsreaktor, wobei
- die Absorptionskolonne (50) eingerichtet ist, um aus einem Gaswäscher des Systems entnommenen Chlorwasserstoff mit Wasser und/oder mit hinsichtlich der Aufnahme von Chlorwasserstoff nicht gesättigter Salzsäure zu kontaktieren;
- der Oxidationsreaktor eingerichtet ist, um aus einem Gaswäscher entnommenen Chlorwasserstoff durch partielle Oxidation zu Chlor umzusetzen, wobei dieses bevorzugt nach einer Trocknung des Chlorwasserstoffs geschieht,
**dadurch gekennzeichnet, dass**
der erste Gaswäscher (10) als Packungskolonne ausgeführt und weiterhin ein erster Salzsäure-Tank (20) vorgesehen ist, in welchem hinsichtlich der Aufnahme von Chlorwasserstoff gesättigte Salzsäure, welche den ersten Gaswäscher (10) durchlaufen hat, gesammelt wird und mittels der Fördereinrichtung (30) erneut auf den ersten Gaswäscher (10) aufgegeben wird.

10. System gemäß Anspruch 9, wobei die hinsichtlich der Aufnahme von Chlorwasserstoff zu ≥ 90% gesättigte Salzsäure und das Chlorwasserstoff-Gas im ersten Gaswäscher (10) im Gegenstrom zueinander geführt werden.

11. System gemäß Anspruch 9 oder 10, weiterhin umfassend:
- einen zweiten Gaswäscher (10') mit einer ihm zugeordneten Fördereinrichtung (30'), wobei der Gaswäscher (10') eingerichtet ist, um Chlorwasserstoff-Gas und hinsichtlich der Aufnahme von Chlorwasserstoff zu ≥ 90% gesättigte Salzsäure miteinander zu kontaktieren, wobei gereinigter Chlorwasserstoff erhalten wird;
wobei die dem zweiten Gaswäscher (10') zugeordnete Fördereinrichtung (30') eingerichtet ist, um hinsichtlich der Aufnahme von Chlorwasserstoff zu ≥ 90% gesättigte Salzsäure zumindest teilweise durch den zweiten Gaswäscher zirkulieren zu lassen;wobei das System eingerichtet ist, um aus dem ersten Gaswäscher (10) entnommenen Chlorwasserstoff in den zweiten Gaswäscher (10') einzuleiten.

## Claims

1. Process for processing hydrogen chloride from isocyanate production comprising the steps of:
a) providing hydrogen chloride
b) purifying the provided hydrogen chloride and further comprising step c) or step d):
c) contacting the purified hydrogen chloride with water and/or with hydrochloric acid not saturated with respect to absorption of hydrogen chloride
d) further processing the purified hydrogen chloride to afford chlorine by partial oxidation **characterized in that**
the hydrogen chloride provided in step a) contains organic and/or nitrogen-containing impurities and
wherein in step b) the purification is carried out such that hydrogen chloride is contacted with hydrochloric acid saturated to an extent of ≥ 90% with respect to absorption of hydrogen chloride at least in a first gas scrubber (10) and this hydrochloric acid is at least partially circulated through the first gas scrubber (10).

2. Process according to Claim 1, wherein the first gas scrubber (10) is in the form of an absorption column.

3. Process according to Claim 1 or 2, wherein the hydrogen chloride provided in step a) and to be purified in step b) has at least periodically a content of impurities expressed as the total nitrogen content (TN) of ≥ 15 ppm and/or at least periodically a content of impurities expressed as the total organic carbon content (TOC) of ≥ 15 ppm.

4. Process according to any of Claims 1 to 3, wherein the hydrogen chloride provided in step a) and to be purified in step b) has a content of impurities expressed as the ratio of the total nitrogen content (TN) to the total organic carbon content (TOC) of ≥ 1:2 to ≤ 2:1.

5. Process according to one or more of Claims 1 to 4, wherein the hydrochloric acid obtained after step c) has a content of impurities expressed as the total nitrogen content (TN) of ≤ 5 ppm and/or a content of impurities expressed as the total organic carbon content (TOC) of ≤ 5 ppm.

6. Process according to one or more of Claims 1 to 5, wherein the hydrogen chloride provided in step a) and to be purified in step b) is obtained from the production of isocyanates by reaction of amines with phosgene.

7. Process according to Claim 6, wherein the amines are aliphatic amines.

8. Process according to one or more of Claims 1 to 7, wherein step b) further comprises:
- purifying the hydrogen chloride obtained from the first gas scrubber (10) by contacting this hydrogen chloride with hydrochloric acid saturated to an extent of ≥ 90% with respect to absorption of hydrogen chloride in a second gas scrubber (10') and this hydrochloric acid is at least partially circulated through the second gas scrubber (10').

9. System for processing hydrogen chloride from isocyanate production comprising:
- at least one first gas scrubber (10) having a conveying means (30) assigned to it, wherein the gas scrubber is adapted for contacting hydrogen chloride gas and hydrochloric acid saturated to an extent of ≥ 90% with respect to absorption of hydrogen chloride to obtain purified hydrogen chloride;
wherein the conveying means assigned to the respective gas scrubber is adapted for at least partially circulating the hydrochloric acid saturated to an extent of ≥ 90% with respect to absorption of hydrogen chloride through the respective gas scrubber;
and an absorption column (50) or an oxidation reactor, wherein
- the absorption column (50) is adapted for contacting hydrogen chloride withdrawn from the gas scrubber of the system with water and/or with hydrogen chloride not saturated with respect to absorption of hydrogen chloride;
- the oxidation reactor is adapted for converting hydrogen chloride withdrawn from the gas scrubber into chlorine by partial oxidation, wherein this is preferably carried out after a drying of the hydrogen chloride,
**characterized in that**
the first gas scrubber (10) is in the form of a packed column and a first hydrochloric acid tank (20) is also provided in which hydrogen chloride saturated with respect to absorption of hydrogen chloride which has passed through the first gas scrubber (10) is collected and sent back to the first gas scrubber (10) using the conveying means (30) .

10. System according to Claim 9, wherein the hydrochloric acid saturated to an extent of ≥ 90% with respect to absorption of hydrogen chloride and the hydrogen chloride gas are run in countercurrent to one another in the first gas scrubber (10).

11. System according to Claim 9 or 10, further comprising:
- a second gas scrubber (10') having a conveying means (30') assigned to it, wherein the gas scrubber (10') is adapted for contacting hydrogen chloride gas and hydrochloric acid saturated to an extent of ≥ 90% with respect to absorption of hydrogen chloride to obtain purified hydrogen chloride;
wherein the conveying means (30') assigned to the second gas scrubber (10') is adapted for circulating hydrochloric acid saturated to an extent of ≥ 90% with respect to absorption of hydrogen chloride at least partially through the respective gas scrubber; wherein the system is adapted for introducing hydrogen chloride withdrawn from the first gas scrubber (10) into the second gas scrubber (10').

## Revendications

1. Procédé pour la transformation de chlorure d'hydrogène provenant de la préparation d'isocyanates, comprenant les étapes :
a) préparation de chlorure d'hydrogène
b) purification du chlorure d'hydrogène préparé et comprenant en outre l'étape c) ou l'étape d) :
c) mise en contact du chlorure d'hydrogène purifié avec de l'eau et/ou avec de l'acide chlorhydrique non saturé en ce qui concerne l'absorption de chlorure d'hydrogène
d) transformation ultérieure du chlorure d'hydrogène
purifié en chlore par oxydation partielle **caractérisé en ce que** le chlorure d'hydrogène préparé dans l'étape a) contient des impuretés organiques et/ou contenant de l'azote et
la purification dans l'étape b) ayant lieu de manière telle que le chlorure d'hydrogène est mis en contact, au moins dans un premier laveur de gaz (10), avec de l'acide chlorhydrique saturé à ≥ 90% en ce qui concerne l'absorption de chlorure d'hydrogène et cet acide chlorhydrique étant mis en circulation au moins partiellement à travers le premier laveur de gaz (10).

2. Procédé selon la revendication 1, le premier laveur de gaz étant réalisé sous forme de colonne d'absorption (10).

3. Procédé selon la revendication 1 ou 2, le chlorure d'hydrogène préparé dans l'étape a) et à purifier dans l'étape b) présentant au moins temporairement une teneur en impuretés, exprimée sous forme de teneur totale en azote (TN), ≥ 15 ppm et/ou au moins temporairement une teneur en impuretés, exprimée sous forme de teneur totale en carbone organique (TOC), ≥ 15 ppm.

4. Procédé selon l'une ou plusieurs des revendications 1 à 3, le chlorure d'hydrogène préparé dans l'étape a) et à purifier dans l'étape b) présentant une teneur en impuretés, exprimée sous forme de rapport de la teneur totale en azote (TN) à la teneur totale en carbone organique (TOC), de ≥ 1:2 à ≤ 2:1.

5. Procédé selon l'une ou plusieurs des revendications 1 à 4, l'acide chlorhydrique obtenu après l'étape c) présentant une teneur en impuretés, exprimée sous forme de teneur totale en azote (TN), ≤ 5 ppm et/ou une teneur en impuretés, exprimée sous forme de teneur totale en carbone organique (TOC), ≤ 5 ppm.

6. Procédé selon l'une ou plusieurs des revendications 1 à 5, le chlorure d'hydrogène préparé selon l'étape a) et à purifier dans l'étape b) étant obtenu à partir de la préparation d'isocyanates par réaction d'amines avec du phosgène.

7. Procédé selon la revendication 6, les amines étant des amines aliphatiques.

8. Procédé selon l'une ou plusieurs des revendications 1 à 7, l'étape b) comprenant en outre :
- la purification du chlorure d'hydrogène obtenu à partir du premier laveur de gaz (10) en ce que ce chlorure d'hydrogène est mis en contact dans un deuxième laveur de gaz (10') avec de l'acide chlorhydrique saturé à ≥ 90% en ce qui concerne l'absorption de chlorure d'hydrogène et cet acide chlorhydrique est mis en circulation au moins partiellement à travers le deuxième laveur de gaz (10').

9. Système pour la transformation de chlorure d'hydrogène provenant de la préparation d'isocyanates, comprenant :
- au moins un premier laveur de gaz (10) pourvu d'un dispositif de transport (30) associé, le laveur de gaz étant conçu pour mettre en contact l'un avec l'autre du chlorure d'hydrogène gazeux et de l'acide chlorhydrique saturé à ≥ 90% en ce qui concerne l'absorption de chlorure d'hydrogène, du chlorure d'hydrogène purifié étant obtenu ;
le dispositif de transport associé au laveur de gaz respectif étant conçu pour faire circuler de l'acide chlorhydrique saturé à ≥ 90% en ce qui concerne l'absorption de chlorure d'hydrogène au moins partiellement à travers le laveur de gaz respectif ; ainsi qu'une colonne d'absorption (50) ou un réacteur d'oxydation,
- la colonne d'absorption (50) étant conçue pour mettre en contact du chlorure d'hydrogène prélevé d'un laveur de gaz du système avec de l'eau et/ou avec de l'acide chlorhydrique non saturé en ce qui concerne l'absorption de chlorure d'hydrogène ;
- le réacteur d'oxydation étant conçu pour transformer du chlorure d'hydrogène prélevé d'un laveur de gaz en chlore par oxydation partielle, ceci ayant de préférence lieu après le séchage du chlorure d'hydrogène,
**caractérisé en ce que** le premier laveur de gaz (10) est réalisé sous forme de colonne à garnissage et en outre, un premier réservoir à acide chlorhydrique (20) est prévu, dans lequel l'acide chlorhydrique saturé en ce qui concerne l'absorption de chlorure d'hydrogène, qui est passé à travers le premier laveur de gaz (10), est rassemblé et de nouveau chargé sur le premier laveur de gaz (10) au moyen du dispositif de transport (30).

10. Système selon la revendication 9, l'acide chlorhydrique saturé à ≥ 90% en ce qui concerne l'absorption de chlorure d'hydrogène et le chlorure d'hydrogène gazeux étant guidés à contre-courant l'un par rapport à l'autre dans le premier laveur de gaz (10).

11. Système selon la revendication 9 ou 10, comprenant en outre :
- un deuxième laveur de gaz (10') pourvu d'un dispositif de transport (30') associé, le laveur de gaz (10') étant conçu pour mettre en contact l'un avec l'autre du chlorure d'hydrogène gazeux et de l'acide chlorhydrique saturé à ≥ 90% en ce qui concerne l'absorption de chlorure d'hydrogène, du chlorure d'hydrogène purifié étant obtenu ;
le dispositif de transport (30') associé au deuxième laveur de gaz (10') étant conçu pour faire circuler de l'acide chlorhydrique saturé à ≥ 90% en ce qui concerne l'absorption de chlorure d'hydrogène au moins partiellement à travers le deuxième laveur de gaz ; le système étant conçu pour introduire du chlorure d'hydrogène prélevé du premier laveur de gaz (10) dans le deuxième laveur de gaz (10').
